(19) **Europäisches Patentamt / European Patent Office / Office européen des brevets**

(11) **EP 1 341 296 B1**

(12) **EUROPÄISCHE PATENTSCHRIFT**

(45) Veröffentlichungstag und Bekanntmachung des Hinweises auf die Patenterteilung:
**23.05.2007  Patentblatt 2007/21**

(21) Anmeldenummer: **03003475.5**

(22) Anmeldetag: **15.02.2003**

(51) Int Cl.:
*G06F 7/62* (2006.01)      *G06F 1/02* (2006.01)
*H02M 7/5395* (2006.01)    *H02M 7/529* (2006.01)
*H03K 3/78* (2006.01)      *H03K 3/02* (2006.01)

(54) **Erzeugung skalierbarer periodischer Signale**

Generating scalable periodic signals

Géneration de signaux échélonnables et périodiques

(84) Benannte Vertragsstaaten:
**DE FR GB IT**

(30) Priorität: **28.02.2002  DE 10208675**

(43) Veröffentlichungstag der Anmeldung:
**03.09.2003  Patentblatt 2003/36**

(73) Patentinhaber: **WILO AG**
**44263 Dortmund (DE)**

(72) Erfinder: **Lelitko, Udo**
**58239 Schwerte (DE)**

(74) Vertreter: **COHAUSZ DAWIDOWICZ**
**HANNIG & SOZIEN**
**Patentanwälte**
**Schumannstrasse 97-99**
**40237 Düsseldorf (DE)**

(56) Entgegenhaltungen:
JP-A- 3 261 375          US-A- 4 481 601
US-A- 5 283 510          US-B1- 6 194 863

- L. LORENZ, K. KANELIS: "System Integration for Consumer Drives" PROCEEDINGS SPS/IPC/ DRIVES, 23. November 1999 (1999-11-23), - 25. November 1999 (1999-11-25) Seiten 511-520, XP002274557

EP 1 341 296 B1

**Beschreibung**

Die Erfindung betrifft ein Verfahren zur Erzeugung elektrischer Ausgangssignale, die insbesondere zur Ansteuerung eines Elektromotors mittels eines Frequenzumrichters dienen, wobei die Größe der Signale mit einer skalierbaren periodischen Funktion moduliert sind und wobei die Größe der Signale an Stützstellen der Funktion berechnet wird.

Gattungsgemäße Verfahren dieser Art sind beispielsweise als Pulsdauer- oder Pulsweitenmodulation (PWM) bekannt und werden zur Ansteuerung von Wechselstrommotoren vermittels Frequenzumrichtern eingesetzt. In einer anderen Ausführungsform können auf der Grundlage einer konstanten Gleichspannung Wechselspannungen von einem Generator erzeugt werden. So werden für Motoren mit N Phasen in der Regel N verschiedene periodische Spannungen benötigt. Dabei werden die Signalverläufe der Spannungen ( z. B. sinusförmig ) durch treppenförmige Signale approximiert. Die Stufen der Treppenfunktionen werden gebildet durch die periodischen Folgen a * $s_1(k)$ bis a * $s_N(k)$ mit der Periode M. Dabei stellen die Folgen $s_1(k)$ bis $s_N(k)$ den benötigten grundlegenden Signalverlauf dar, während a ein Faktor ist, mit dem die Signale skaliert werden. Durch Veränderung des Faktors a ist es somit möglich, die Amplituden der Ausgangssignale zu verändern, wie dies z. B. für einen Frequenzumformer zur Ansteuerung eines Motors erforderlich ist.

Es ist bekannt, zur Realisierung einer solchen Funktion die Werte der Folgen $s_1(k)$ bis $s_N(k)$ ( mit k=1 bis M) in einer Tabelle zu speichern. Die Ausgangssignale werden dann berechnet durch Multiplikation der Tabellenwerte mit dem Faktor a.

Zur Berechnung einer Periode der Ausgangssignale sind entsprechend N * M Multiplikationen von zwei veränderlichen Werten erforderlich, was mit einem erheblich Rechen- und damit Zeitaufwand einhergeht. Zudem ist nachteilig, daß zum Speichern der Tabelle unter Umständen entsprechend viel Speicherplatz zur Verfügung gestellt werden muß, was entsprechende Kosten verursacht.

Die Veröffentlichung "System Integration for Consumer Drives", erschienen im Tagunsband der SPS/IPC/DRIVES von 1999, beschreibt ein Näherungsverfahren zur Berechnung von PWM-Signalen mit gerigem Rechen- und Speicheraufwand.

Aufgabe der Erfindung ist es nunmehr, ein gattungsgemäßes Verfahren zu schaffen, das sich mit einfachen Mitteln und unter Nutzung eines vergleichsweise kleinen Speicherbereiches umsetzen läßt und das mit geringem Rechenaufwand zuverlässige Ausgangssignale erzeugt.

Diese Aufgabe wird durch ein Verfahren mit den kennzeichnenden Merkmalen des Anspruch 1 gelöst.

Der erfindungswesentliche Gedanke liegt darin, die bislang benötigten und rechnerisch aufwendigen Multiplikationen durch wesentlich einfachere Additionen zu ersetzen. Multiplikationen werden erfindungsgemäß wo sie nötig sind nur im Falle von Konstanten eingesetzt, was in besonders einfachen Fällen technisch durch die unkomplizierte Verschiebung von Bits möglich ist. So wird im wesentlichen die Signalgröße an einer Stützstelle durch Addition des positiven oder negativen Wertes mindestens einer Hilfsvariablen auf die Signalgröße an der vorangegangenen Stützstelle berechnet. So ist es mit Hilfe des vorgestellten Verfahrens möglich, skalierbare periodische Signale zu erzeugen, wobei als Rechenoperationen lediglich Additionen, Subtraktionen und/oder die Multiplikation mit Konstanten erforderlich sind. Durch eine Vielzahl von Variablen lassen sich beliebige Funktionen annähren.

Bezüglich der Generierung der Hilfsvariablen gibt es verschiedene Möglichkeiten. So kann es bei einer kleinen Zahl von Hilfsvariablen vorteilhaft sein, diese in Abhängigkeit der zu berechnenden Ausgabesignalen in einem Speicher niederzulegen und für die Addition aufzurufen. Eine höhere Flexibilität wird jedoch erreicht, wenn die Werte der Hilfsvariablen in Abhängigkeit von der jeweiligen Stützstelle aktuell berechnet wird. Die Hilfsvariablen können dabei durch die gleichen Formalismen, nämlich eine einfache Addition oder eine Multiplikation mit einer Konstanten oder weiteren Hilfsvariablen generiert werden. Auf diese Weise wird ein mit einfachen und kostengünstigen Mitteln umzusetzendes Verfahren zur besonders schnellen Generierung von Ausgangssignalen geschaffen. Vorteilhafter Weise wird auch die Hilfsvariable berechnet durch Addition des Wertes der vorangehenden Hilfsvariablen auf einen Summanden, der seinerseits berechnet ist über eine Multiplikation mit einer festgelegten Konstanten. Auch die vorangegangene Hilfsvariable kann mit einem konstanten Faktor multipliziert werden. Ein besonderer Vorteil des Verfahrens resultiert somit daraus, daß sich durch Einführung weiterer Hilfsvariablen Funktionen beliebiger Ordnung generieren lassen. Letztendlich entspricht der zugrundeliegende Formalismus der Lösung eines linearen Differenzengleichungssystemes.

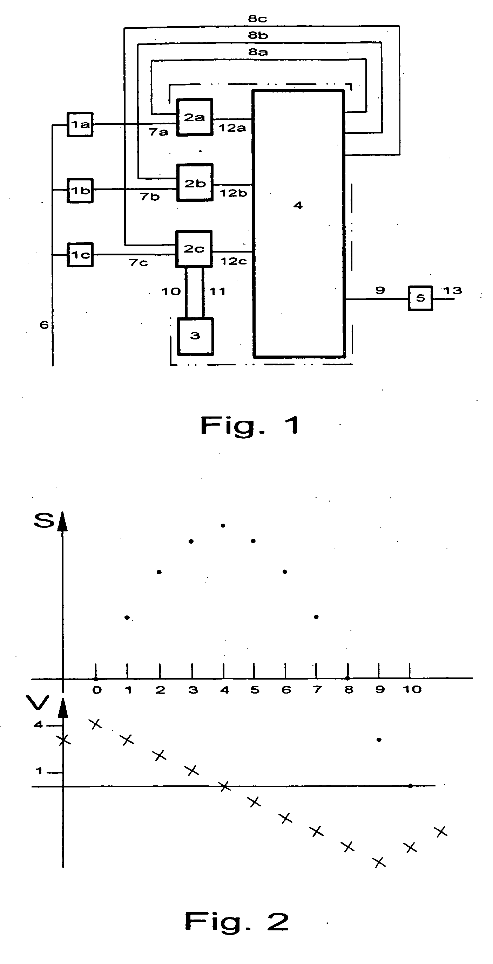

Das erfindungsgemäße Verfahren wird nachfolgend anhand der in den Figuren 1 und 2 dargestellten Schemata näher erklärt. Es zeigen:

**Figur 1** ein Rechenwerk zur Generierung von Ausgangssignalen und

**Figur 2** eine Halbwelle mit an den Stützstellen berechneten Werten.

Ausgehend von einer periodischen Folge $s_1(k)$ bis $s_N(k)$ mit einer Periode M, bei der die Werte $s_1(k)$ bis $s_N(k)$ (mit k=1 bis M) den benötigten grundlegenden Verlauf der Ausgangssignale s darstellen, ergibt sich erfindungsgemäß folgende Berechnung, die mit dem in Figur 1 dargestellten Generator durchgeführt wird. Dabei werden bei der in diesem Beispiel dargestellten Rechnung drei Variablen bzw. Hilfsvariablen eingesetzt. Für eine solche Berechnung 3.Ordnung ergeben sich beispielsweise die grundlegenden Gleichungen:

$$s_{n+1} = s_n + v_n \text{ (wobei } s_0 = 0)$$

$$v_{n+1} = v_n + C_n * A \text{ (wobei } v_0 = 0 \text{ und } A = const = 4 \text{ ) und}$$

und

$$C_0 = 1; C_1 \text{ bis } C_8 = -\tfrac{1}{4}$$

wobei die Hilfsvariablen C gespeichert sind und wobei sich die Folge nach acht Stützstellen mit umgekehrter Steigung wiederholt (Figur 2, unten). Somit ergibt sich für $s_0 = 0$, für $s_1 = 4$, $s_2 = 7$, $s_3 = 9$, $s_4 = 10$, $s_5 = 9$, $s_6 = 7$, $s_7 = 4$ und $s_8 = s_0 = 0$ bevor die Werte negativ werden. Auf diese Wiese kann eine Funktion von s mit periodischer Wiederkehr erzeugt werden, wobei der oszillierende Sinus durch parabelförmige Halbwellen angenährt wird.

Die technische Realisierung dieser Annäherung ist in Figur 1 gezeigt. Über die Leitung 6 liegt an den Elementen 1 der Skalierungsfaktor A, in diesem Fall 4 an, der eine Skalierung, hier eine vierfache Verstärkung, der zu erzeugenden Funktion bewirkt. Die Elemente 1a, 1b und 1c bilden Multiplizierer mit einer Konstanten, wobei die Ausgangswerte 7a, 7b und 7c den Speicherelementen 2a,2b und 2c zugeführt werden. Hier ist das Speicherelement 2a für die Berechnung von s, das Speicherelement 2b für die Berechnung von v und das Speicherelement 2c für die "Berechnung" des konstanten C zuständig. Zu Beginn einer Periode wird von einem Taktgenerator 3 ein Impuls auf der Leitung 10 erzeugt und es werden die Speicherelementen 2a ,2b und 2c veranlaßt, die Hilfsvariablen 7a, 7b und 7c zu speichern und als Signale an die Ausgänge 12a, 12b und 12c weiterzuleiten. Die Signale 12 werden einem linearen Rechenwerk 4 zugeführt, in dem eine Additionen als lineare Operationen durchgeführt wird. Als Ergebnisse dieser Operation entstehen einerseits die Signale 8a, 8b und 8c, die als Wert der Variablen an der vorhergegangenen Stützstelle wiederum den entsprechenden Speicherelementen 2a ,2b und 2c zugeführt werden. In diesem Sinne stellen die Speicherelemente 2 das Rechenwerk 4 und der Taktgenerator 3 einen Inkrementierer dar. So werden bei einem Impuls des Taktgenerators 3 auf der Leitung 11 die Speicherelemente 2 veranlaßt die Signale 8 zu speichern und an die Ausgänge 12 für die nächste Operation weiterzuleiten.

Der Taktgenerator 3 erzeugt zu Beginn jeder Periode einen Impuls auf der Leitung 10 und danach M-1 Impulse auf der Leitung 11. Ein Ausgangssignal für s liegt an der Ausgangsleitung 9 an und wird durch den Analog zu Digital-Wandler 5 von der digitalen Zahlendarstellung in ein analoges Ausgangssignal 13 umgewandelt.

**Patentansprüche**

1.  Verfahren zur Erzeugung elektrischer Ausgangssignale, die insbesondere zur Ansteuerung eines Elektromotors mittels eines Frequenzumrichters dienen, wobei die Größe der Signale mit einer skalierbaren periodischen Funktion moduliert sind und wobei die Größe der Signale an Stützstellen der Funktion berechnet wird,
    **dadurch gekennzeichnet, daß** die Signalgröße an einer Stützstelle berechnet wird durch Addition des Wertes mindestens einer Hilfsvariablen zu der Signalgröße an der vorangegangenen Stützstelle.

2.  Verfahren nach Anspruch 1,
    **dadurch gekennzeichnet, daß** die Werte der Hilfsvariablen in Abhängigkeit von der Stützstelle in einem Speicher gespeichert sind.

3.  Verfahren nach Anspruch 1,
    **dadurch gekennzeichnet, daß** der Wert der Hilfsvariablen in Abhängigkeit von der Stützstelle berechnet wird.

4.  Verfahren nach Anspruch 3,
    **dadurch gekennzeichnet, daß** die Hilfsvariable berechnet wird durch Addition des Wertes der vorangehenden Hilfsvariablen auf einen Summanden.

**5.** Verfahren nach Anspruch 4,
**dadurch gekennzeichnet, daß** der Summand seinerseits berechnet ist über eine Multiplikation einer weiteren Hilfsvariablen mit einer festgelegten Konstanten.

**6.** Verfahren nach einem der vorherigen Ansprüche,
**dadurch gekennzeichnet, daß** die Addition und/oder die Multiplikation mit einem konstanten Faktor mittels eines linearen Rechenwerkes vorgenommen wird.

**7.** Verfahren nach einem der vorherigen Ansprüche,
**dadurch gekennzeichnet, daß** das Rechenwerk in Verbindung mit einem vorgeschalteten Speicherelement, in das ein Ausgabewert des Rechenwerkes zurückgeführt wird, einen Inkrementierer realisiert.

**8.** Verfahren nach einem der vorherigen Ansprüche,
**dadurch gekennzeichnet, daß** die Rechenoperationen durch einen Taktgenerator getriggert werden.

**Claims**

**1.** Method for generating electrical output signals, which are used particularly for controlling an electric motor by means of a frequency converter, in which the magnitude of the signals is modulated with a scalable periodic function and in which the magnitude of the signals is calculated at support points of the function,
**characterised in that** the magnitude of the signal is calculated at a support point by adding the value of at least one auxiliary variable to the magnitude of the signal at the preceding support point.

**2.** Method according to claim 1,
**characterised in that** the values of the auxiliary variables are stored in a memory depending on the support point.

**3.** Method according to claim 1,
**characterised in that** the value of the auxiliary variables is calculated depending on the support point.

**4.** Method according to claim 3,
**characterised in that** the auxiliary variable is calculated by adding the value of the preceding auxiliary variable to a summand.

**5.** Method according to claim 4,
**characterised in that** the summand is calculated in turn by multiplying a further auxiliary variable with a fixed constant.

**6.** Method according to one of the previous claims,
**characterised in that** adding and/or multiplying is done with a constant factor by means of a linear arithmetic unit.

**7.** Method according to one of the previous claims,
**characterised in that** the arithmetic unit in connection with an upstream memory unit, to which an output value of the arithmetic unit is returned, produces an incrementer.

**8.** Method according to one of the previous claims,
**characterised in that** the calculation operations are triggered by a clock generator.

**Revendications**

**1.** Procédé pour engendrer des signaux électriques de sortie, qui servent en particulier pour la commande d'un moteur électrique au moyen d'un mutateur, la grandeur des signaux étant modulée par une fonction périodique pouvant être échelonnée et la grandeur des signaux étant calculée à des points nodaux de la fonction,
**caractérisé par le fait que** la grandeur de signal à un point nodal est calculée par addition de la valeur d'au moins une variable auxiliaire à la grandeur de signal au point nodal passé précédemment.

**2.** Procédé selon la revendication 1,

**caractérisé par le fait que** les valeurs des variables auxiliaires sont mémorisées dans une mémoire en dépendance des points nodaux.

3. Procédé selon la revendication 1,
   **caractérisé par le fait que** la valeur des variables auxiliaires est calculée en dépendance des points nodaux.

4. Procédé selon la revendication 3,
   **caractérisé par le fait que** la variable auxiliaire est calculée par addition de la valeur de la variable auxiliaire passée précédemment sur un terme d'une somme.

5. Procédé selon l'une des revendications précédentes,
   **caractérisé par le fait que** le terme d'une somme est calculé de son côté par l'intermédiaire d'une multiplication d'une autre variable auxiliaire par une constante fixée.

6. Procédé selon l'une des revendications précédentes,
   **caractérisé par le fait que** l'addition et/ou la multiplication par un facteur constant sont réalisées au moyen d'un calculateur linéaire.

7. Procédé selon l'une des revendications précédentes,
   **caractérisé par le fait que** le calculateur réalise un incrémenteur en liaison avec un élément de mémoire intercalé dans lequel est ramenée une valeur d'édition du calculateur.

8. Procédé selon l'une des revendications précédentes,
   **caractérisé par le fait que** les opérations de calcul sont déclenchées par un générateur de cadence.

Fig. 1

Fig. 2